Europäisches Patentamt

European Patent Office

Office européen des brevets

(19)

(11) Numéro de publication : **0 067 764 B1**

(12) **FASCICULE DE BREVET EUROPÉEN**

(45) Date de publication du fascicule du brevet :
09.01.85

(21) Numéro de dépôt : **82401030.0**

(22) Date de dépôt : **07.06.82**

(51) Int. Cl.⁴ : **C 01 G 49/14, B 01 F 3/18, B 01 F 7/08, A 01 N 59/16**

(54) **Procédé et dispositif pour fluidiser du sulfate de fer heptahydraté et produits obtenus.**

(30) Priorité : **09.06.81 FR 8111875**

(43) Date de publication de la demande :
**22.12.82 Bulletin 82/51**

(45) Mention de la délivrance du brevet :
**09.01.85 Bulletin 85/02**

(84) Etats contractants désignés :
**BE DE FR GB IT LU NL**

(56) Documents cités :
**DE-C- 716 169
FR-A- 1 555 348
FR-A- 2 000 430
FR-A- 2 008 539
FR-A- 2 261 229
GB-A- 1 138 210
CHEMICAL ABSTRACTS, vol. 94, no. 9, 2 mars 1981, page 595, résumé no. 64100f, Columbus, Ohio (US)**

(73) Titulaire : **Josse, Marc
25, rue de Brest
F-35000 Rennes (FR)**

**Biard, Jean-Louis
29 Boulevard de la République
F-35403 Saint-Malo (FR)**

(72) Inventeur : **Josse, Marc
25, rue de Brest
F-35000 Rennes (FR)**
Inventeur : **Biard, Jean-Louis
29 Boulevard de la République
F-35403 Saint-Malo (FR)**

(74) Mandataire : **Schrimpf, Robert et al
Cabinet Regimbeau 26, Avenue Kléber
F-75116 Paris (FR)**

Jouve, 18, rue St-Denis, 75001 Paris, France

## 0 067 764

### Description

L'invention concerne la fluidisation du sulfate ferreux heptahydraté communément appelé sulfate de fer neige.

Ce sulfate de fer est un sous-produit obtenu de façon industrielle dans les installations de laminage.

Il se présente généralement sous la forme de grains humides dont la composition moyenne est par exemple la suivante :

| | | | |
|---|---|---|---|
| $FeSO_4 \cdot 7\,H_2O$ | : | 95 | % |
| Cuivre (Cu) | : | 0,002 | % |
| Manganèse (Mn) | : | 0,05 | % |
| Chlorure (Cl) | : | 0,025 | % |

Outre l'eau d'hydratation, ce produit comporte une forte teneur en humidité qui est généralement de l'ordre de 40 %, voisine de la saturation.

Les grains humides peuvent être déplacés sur des transporteurs à tapis mais ils se prêtent mal à des transports pneumatiques et la présente invention vise à fournir un procédé et un dispositif pour « fluidiser » ces grains sans nuire à leur qualité.

On connaît par la publication FR-A-2 261 229 un procédé pour l'obtention de sulfate de fer heptahydraté à écoulement libre qui consiste à débarrasser le sulfate de l'eau d'imbibition et à le traiter simultanément avec de l'ammoniac gazeux pour obtenir l'évaporation de l'eau d'imbibition, la neutralisation de l'acide libre d'imbibition et l'oxydation partielle du fer bivalent en fer trivalent.

La présente invention vise à obtenir la fluidisation sans avoir recours à un séchage du produit et sans dénaturer le sulfate de fer.

On y parvient, selon la présente invention, en mélangeant les grains de sulfate ferreux heptahydraté avec une poudre de silice de façon à enrober les grains de sulfate de fer.

De préférence, on règle les conditions physiques du mélange de façon à éviter une absorption d'eau par la silice.

L'utilisation de silices pour fluidiser des produits pulvérulents est connue et elle a été décrite dans diverses publications.

Plus précisément, il est connu d'utiliser la silice pour éviter l'agglomération d'une poudre hydrophile, le mélange de la poudre et de la silice étant réalisé avant agglomération de la poudre sous l'action de l'humidité, comme décrit par exemple dans la publication FR-A-2 000 430 qui concerne le traitement des engrais et la publication FR-A-2 008 539 qui concerne le traitement du sel.

Ces publications ne résolvent pas le problème de la fluidisation du sulfate ferreux heptahydraté qui ne constitue pas un produit hydrophile.

On a pensé, d'autre part, à utiliser de la silice hydrophobe pour conserver l'aptitude au saupoudrage de substances sensibles à l'humidité comme certains oxydes métalliques mais à condition d'agir sur les oxydes avant agglomération comme le rappelle le brevet français 1 555 348.

Cette publication préconise de remplacer la silice hydrophobe par une addition de cette silice et de silice hydrophile mais ceci doit être fait avant agglomération et ce mélange de silice est utilisé comme un adjuvant de broyage.

Ainsi, jusqu'à présent, on n'avait pas découvert que la silice permettait de fluidiser des flocons de sulfate ferreux heptahydraté sans avoir recours à un séchage.

De préférence, la quantité de silice ajoutée au sulfate ferreux est comprise entre 2,5 et 3 % en poids de silice par rapport au sulfate de fer.

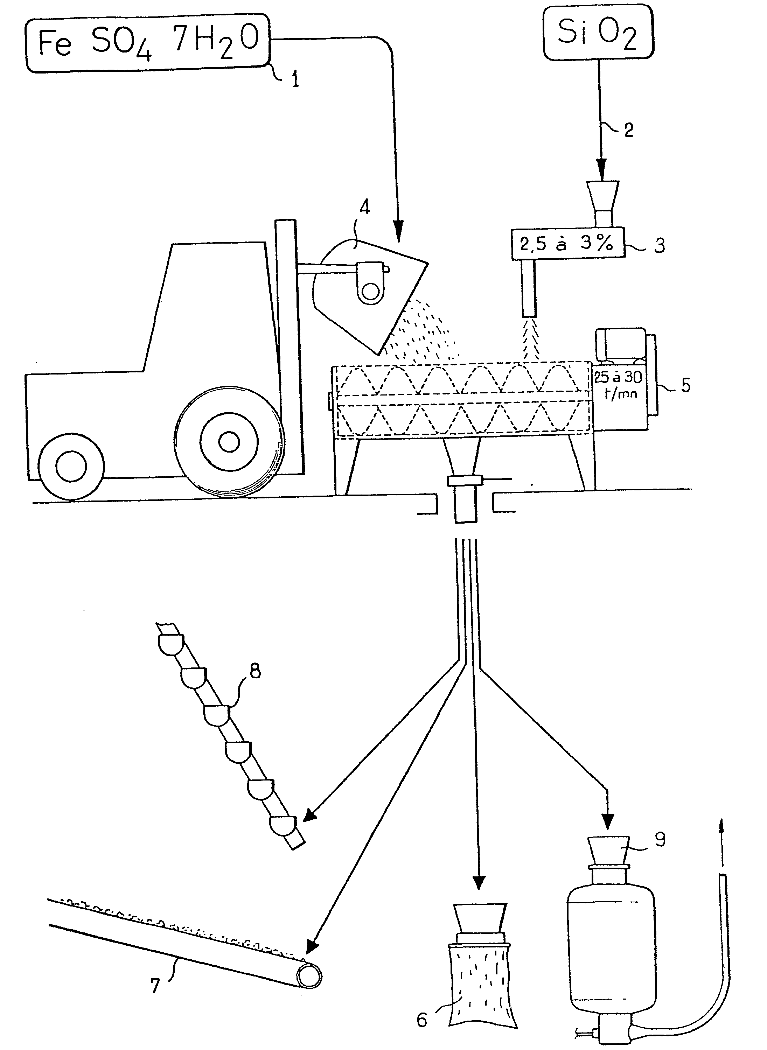

On décrira ci-après un dispositif de mise en œuvre du procédé de l'invention, en référence à la figure unique du dessin.

Le dessin est relatif au traitement du sulfate ferreux heptahydraté, originaire d'opérations courantes de laminage.

La grosseur des grains de ce produit est généralement inférieure à 1 mm. Il est sous sa forme brute, colmatant et simplement transportable et stockable en vrac, généralement en container 4. Ce « produit » est alors versé dans une mélangeuse 5, de type horizontal, comportant une vis à deux hélices aux pas inverses.

La silice 2 est dosée avant d'être introduite elle aussi dans la mélangeuse, au moyen d'un dispositif 3.

On utilise une silice qui répond sensiblement à la composition suivante :

| | | | |
|---|---|---|---|
| $SiO_2$ | 82 | à | 92 % |
| Humidité | 4 | à | 6 % |
| PH | 6 | à | 7 % |
| Densité | 1,9 | à | 1,95 |

La quantité de $SiO_2$ ajoutée au sulfate ferreux est comprise entre 2,5 et 3 % de ce dernier. Le dosage optimum est de 2,76 %. La mélangeuse horizontale dont la vitesse de rotation peut varier de 25 à 30 tours

2

par minute, pour un diamètre extérieur de vis de 950 mm et un pas de 850 mm, réalise le mélange et l'enrobage du sulfate de fer par la silice sous réserve de faire durer cette opération pendant 3 à 5 minutes.

Si la vitesse de rotation est supérieure au seuil de 30 tours par minute, il se produit une perte de silice. Dans le cas où cette vitesse est trop faible, moins de 25 tours par minute, il faut augmenter la quantité relative de silice, celle-ci absorbant l'humidité. Les seuils de durée du mélange sont eux aussi importants, car en dessous d'un minimum de 3 minutes, le mélange n'est pas réalisé de façon satisfaisante, alors qu'au-dessus de 5 minutes, il y a à nouveau prise d'humidité par la silice. Quant les conditions optimales de mélange sont respectées, on obtient un sulfate de fer fluide, parfaitement coulant, et autorisant alors toutes les opérations classiques de transport et de conditionnement des pulvérulents. C'est-à-dire que l'on peut réaliser l'ensachage 6, ou tout autre conditionnement, mais aussi transporter ce produit avec les moyens courants, bande transporteuse 7, chaîne à godets 8, et même transport pneumatique 9. Ceci autorise le stockage ou le transport en vrac par camion ou wagon, sans problème particulier.

Le sulfate ferreux fluidisé est notamment utilisable comme oligo-élément pour la nutrition animale.

## Revendications

1. Procédé pour fluidiser du sulfate ferreux heptahydraté se trouvant à l'état de grains humides, caractérisé en ce qu'il consiste à mélanger ces grains (1) et de la poudre de silice (2) pour enrober les grains de sulfate ferreux.

2. Procédé selon la revendication 1, caractérisé en ce qu'on réalise le mélange à raison de 2,5 à 3 % en poids de poudre de silice par rapport au poids de sulfate ferreux.

3. Procédé selon l'une des revendications 1 et 2, caractérisé en ce qu'on utilise une poudre de silice contenant environ 82 à 92 % de $SiO_2$ et environ 4 à 6 % d'humidité.

4. Procédé selon l'une des revendications 1 à 3, caractérisé en ce qu'on l'applique à du sulfate ferreux proche de la saturation.

5. Procédé selon l'une des revendications 1 à 4, caractérisé en ce qu'on l'applique à un sulfate ferreux contenant environ 95 % en poids de $FeSO_4 \cdot 7 H_2O$.

6. Procédé selon l'une des revendications 1 à 5, caractérisé en ce qu'on réalise le mélange avec une mélangeuse (5) horizontale comportant une vis à deux hélices aux pas inversés, alimentée d'une part avec les grains humides de sulfate ferreux heptahydraté et, d'autre part, avec la poudre de silice (2).

7. Procédé selon la revendication 6, caractérisé en ce qu'on règle la vitesse de rotation des hélices à 25-30 t/m.

8. Procédé selon la revendication 6 ou 7, caractérisé en ce qu'on règle la durée de l'opération de mélange à 3-5 minutes.

9. Les grains de sulfate ferreux heptahydratés humides enrobés de silice obtenus par un procédé selon l'une des revendications 1 à 8.

## Claims

1. A process for fluidizing ferrous sulphate heptahydrate in the form of moist grains, characterised in that it consists of mixing these grains (1) and silica powder (2) to coat the grains of ferrous sulphate.

2. A process according to claim 1, characterised in that the mixture is effected in a ratio of 2.5 to 3 % by weight of silica powder with reference to the weight of ferrous sulphate.

3. A process according to one of claims 1 and 2, characterised in that a silica powder containing from about 82 to 92 % of $SiO_2$ and from about 4 to 6 % moisture is used.

4. A process according to one of claims 1 to 3, characterised in that it is applied to ferrous sulphate nearing saturation.

5. A process according to one of claims 1 to 4, characterised in that it is applied to ferrous sulphate containing about 95 % by weight of $FeSO_4 \cdot 7 H_2O$.

6. A process according to one of claims 1 to 5, characterised in that mixing is carried out using a horizontal mixer (5) comprising an inverted pitch twin-screw, supplied on the one hand with the moist grains of ferrous sulphate heptahydrate and on the other hand with silica powder.

7. A process according to claim 6, characterised in that the speed of the screws is adjusted to from 25 to 30 rpm.

8. A process according to claim 6 or 7, characterised in that the duration of the mixing operation is adjusted to from 3 to 5 min.

9. Silica-coated moist grains of ferrous sulphate heptahydrate obtained by a process according to one of claims 1 to 8.

## Ansprüche

1. Verfahren zur Fluidisierung von Eisensulfatheptahydrat, das in Form von feuchten Körnchen vorliegt, dadurch gekennzeichnet, daß diese Körnchen (1) mit Siliciumdioxidpulver (2) gemischt werden, um die Eisensulfatkörnchen zu umhüllen.

2. Verfahren nach Anspruch 1, dadurch gekennzeichnet, daß zum Mischen 2,5 bis 3 Gew.% Siliciumdioxidpulver, bezogen auf das Gewicht des Eisensulfats, verwendet werden.

3. Verfahren nach einem der Ansprüchen 1 und 2, dadurch gekennzeichnet, daß ein Siliciumdioxidpulver verwendet wird, das etwa 82 bis 92 % $SiO_2$ und etwa 4 bis 6 % Feuchtigkeit enthält.

4. Verfahren nach einem der Ansprüche 1 bis 3, dadurch gekennzeichnet, daß es auf nahezu gesättigtes Eisensulfat angewendet wird.

5. Verfahren nach einem der Ansprüche 1 bis 4, dadurch gekennzeichnet, daß es auf ein Eisensulfat angewendet wird, das etwa 95 Gew.% $FeSO_4 \cdot 7 H_2O$ enthält.

6. Verfahren nach einem der Ansprüche 1 bis 5, dadurch gekennzeichnet, daß das Mischen mit einem horizontalen Mischer (5) durchgeführt wird, der eine Schraube mit zwei Gewinden mit entgegengesetzten Gewindegängen aufweist, der einerseits die feuchten Eisensulfatheptahydrat-Körnchen und andererseits das Siliciumdioxidpulver (2) zugeführt werden.

7. Verfahren nach Anspruch 6, dadurch gekennzeichnet, daß die Rotationsgeschwindigkeit der Schraubgewinde auf 25 bis 30 t/m eingestellt wird.

8. Verfahren nach Anspruch 6 oder 7, dadurch gekennzeichnet, daß die Dauer des Mischvorganges auf 3 bis 5 Minuten eingestellt wird.

9. Mit Siliciumdioxid umhüllte, feuchte Eisensulfatheptahydrat-Körnchen, wie sie bei dem Verfahren nach einem der Ansprüche 1 bis 8 erhalten werden.